# EUROPÄISCHE PATENTANMELDUNG

(11) **EP 2 213 174 A1**
(43) Veröffentlichungstag der Anmeldung: **04.08.2010**
(21) Anmeldenummer: 09001437.4
(22) Anmeldetag: 03.02.2009
(51) Int. Cl.: A21B 1/48

(54) **Durchlauf-Backofen**

(71) Anmelder: Pietruska, Michael, 08209 Auerbach (DE); Heckel, Bernd, 08485 Lengenfeld (DE); Hermle, Dieter, 08485 Lengenfeld (DE)
(72) Erfinder: Pietruska, Michael, 08209 Auerbach (DE); Heckel, Bernd, 08485 Lengenfeld (DE); Hermle, Dieter, 08485 Lengenfeld (DE)
(74) Vertreter: Helge, Reiner

(57) **Zusammenfassung**

Durchlauf-Backofen, welcher sich aus einer Vielzahl von Modulen zusammensetzt, wobei jedes Modul (2) als eine eigenständige thermische Einheit, bestehend aus Gebläsebrenner (4), Wärmetauscher (5), Umwälzer (6), Radiatoren (7) und Umwälzkanälen (8) für Vor- und/oder Rücklauf der Backraumluft ausgebildet ist.
Bei einer Ausführungsform des erfindungsgemäßen Durchlauf-Backofens werden kontinuierlich anfallenden wärmebeladenen Rauchgase über den Rauchgas-Sammelkanal zum jeweils nachfolgenden Modul (2) weitergeleitet, so daß die Gebläsebrenner (4) des jeweiligen nachfolgenden Moduls (2) nur dann zugeschaltet werden, wenn die vom vorangegangenen Modul übertragene Wärmemenge nicht ausreicht, um die für dieses Modul vorgesehene Solltemperatur über die vorgesehene Zeit zu halten.

## Beschreibung

Die Erfindung betrifft einen Durchlauf-Backofen, welcher sich aus einer Vielzahl von Modulen zusammensetzt.

Derartige Durchlauf-Backöfen für eine kontinuierliche Wärmebehandlung, insbesondere zum automatischen Backen, sind in einer großen Vielzahl bekannt.

Aus der DE 102 28 500 A1 ist eine Vorrichtung zur automatischen Wärmebehandlung von stückförmigen Lebensmitteln mit einer Mehrzahl von Modulen, die mindestens ein automatisches Zuführmodul zur automatischen oder halbautomatischen Zuführung von zu behandelnden Lebensmitteln, mindestens ein manuelles Zuführmodul zur manuellen Zuführung von Lebensmitteln und mindestens ein Ofenmodul zum kontinuierlichen oder intermittierenden Wärmebehandeln von Lebensmitteln umfassen, wobei die Module in einem gemeinsamen Gehäusemodul aufgenommen sind oder in einzelnen Gehäusemodulen aufgenommen sind, die entweder einem Basisgehäusemodul mit vorgegebenen Abessungen entsprechen oder vom Basisgehäusemodul abgeleiteten Sekundärgehäusemodulen entsprechen, wobei sich mehrere Sekundärgehäusemodule miteinander in der Form eines Basisgehäusemoduls miteinander kombinieren lassen, bekannt.

Diese Ausführung bietet zwar die Möglichkeit des Zusammensetzen eines Backofens aus Modulen mit jeweils speziellen Aufgabenbereichen, wie ein Mikrowellen-Modul für ein in den Arbeitsprozeß eingebundener Abschnitt zum Auftauen von tiefgefrorenem Backgut, oder einem Gärmodul, oder einem Verpackungsmodul, weist jedoch den Nachteil auf, daß die einzelnen Module nur zweckgebunden zum Einsatz kommen können und nur mit erheblichem Aufwand in eine bereits vorhandene Backofenstrecke eingebaut werden können.

Die DE 1 138 361 gibt einen Wanderherd- Brotbackofen, insbesondere einen Netzbandofen mit einer indirekten Backraumheizung und mit einer von der Backraumheizung unabhängigen Backraumluftumwälzung durch ein in der Backraumdecke vorgesehenes, ab einer Stelle nahe dem Ofeneinlaß bis zu einer Stelle nahe dem Ofenauslaß erstrecktes Kanalsystem, das eine Vielzahl von über die Backraumlänge verteilten wahlweise auf- und zuschließbaren, schieber-, klappen- oder ventilgesteuerten Verbindungsöffnungen zum Backraum aufweist, wieder, wobei dem Kanalsystem für die Backraumluftumwälzung zwei voneinander unabhängige Ventilatoren einbezogen und diese Ventilatoren mit dem Kanalsystem über Umschaltleitungen zusammenschaltbar vorgesehen sind.

Bei dieser konstruktiven Ausführung ist es von Nachteil, daß zum einen das angegebene Luftführungssystem ohne Wärmetauscher arbeitet und zum anderen der angegebene Bachofen als eine Komplett-Einheit, das heißt nicht in Modulbauweise ausgeführt ist.

Der vorliegenden Erfindung liegt die Aufgabe zu Grunde, einen Durchlauf-Backofen in Modulbauweise zu schaffen, bei welchem sich die Module mit beliebiger Anzahl und Reihenfolge auf die Produkt- und Kapazitätsanforderung zu der erforderliche Ofeneinheit in einfacher Art und Weise zusammenfügen lassen. Erfindungsgemäß wird diese Aufgabe dadurch gelöst, daß jedes Modul als eine eigenständige thermische Einheit, bestehend aus einem Gebläsebrenner, einem Wärmetauscher, einem Umwälzer, Radiatoren und Umwälzkanälen für Vor- und/oder Rücklauf der Backraumluft ausgebildet ist, wobei das Modul von einer oder mehreren Sektion(en) gebildet ist.

Vorzugsweise wird das Modul aus zwei Sektionen gebildet, wobei eine als Brennersektion und die andere als Gebläse- bzw. Umwälzsektion ausgebildet ist.

Als einer der wesentlichen Vorteile dieser erfindungsgemäßen Lösung ist die mit der erfindungsgemäßen Modulbauweise möglich werdende wesentlich größere Variabilität eines derartigen Durchlauf-Backofens, denn es können vorhanden Module aus der bisher genutzten Backstrecke bei geringstem Zeitaufwand entfernt und einer anderen Anlage zugeordnet werden bzw. durch Einfügen zusätzlicher Module kann die Backstrecke des Durchlaufofens schnell erweitert und so auf spezielle Kundenwünsche reagiert werden.

Desweiteren ermöglicht es die erfindungsgemäße Modulbauweise, daß auch nach der Produktionsaufnahme der Durchlauf-Backofen neu konfiguriert und so schnell und unkompliziert auf plötzliche Produkt- und/oder Kapazitätswechsel reagiert werden kann.
Die Durchlaufbacköfen können beispielsweise als Netz- oder Plattenbandöfen ausgebildet sein. Ferner ermöglicht es die erfindungsgemäße Modulbauweise, daß der Durchlauf-Backofen konstruktiv auch mehretagig ausgeführt werden kann.

Das Vorhalten eines Wärmetauschersystem in jedem Modul eröffnet eine wesentlich bessere Gesamt-Energiebilanz für den Durchlauf-Backofen, denn die kontinuierlich anfallenden Wärme beladenen Rauchgase werden über den Rauchgas-Sammelkanal zum jeweils nachfolgenden Modul weitergeleitet, so daß die Gebläsebrenner nur dann zugeschaltet werden, wenn die vom vorangegangenen Modul übertragene Restwärme nicht ausreicht, um die für dieses Modul vorgesehene Solltemperatur über die vorgesehene Zeit zu halten.

Vorteilhafte Weiterbildungen und Ausgestaltungen der Erfindung sind aus den übrigen Unteransprüchen und aus dem nachfolgend an Hand der Zeichnung prinzipmäßig beschriebenen Ausführungsbeispiel ersichtlich. Es zeigen
Fig. 1 - prinzipiellen Aufbau des Durchlaufbackofens
Fig. 2 - Ausbildung der Radiatoren

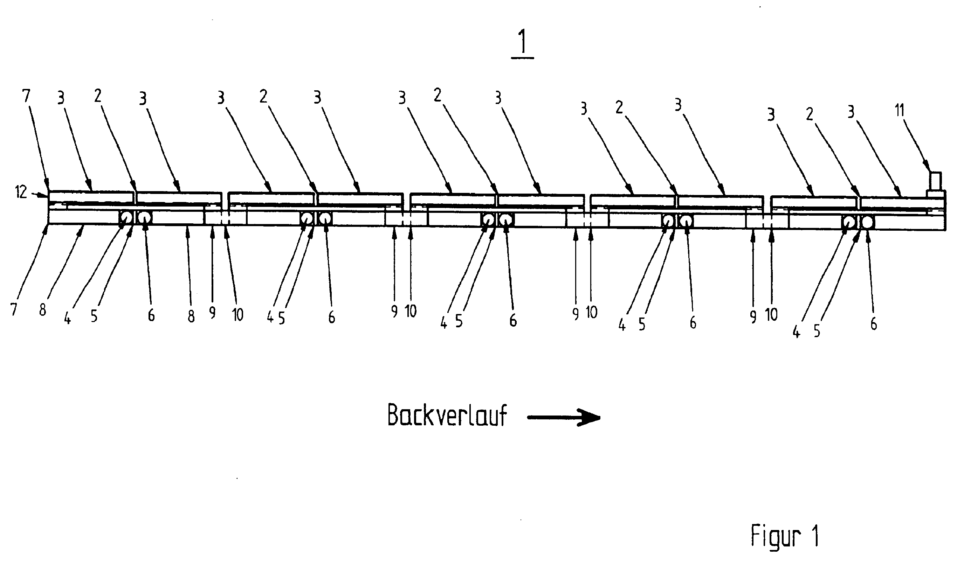

Die **Figur 1** zeigt in einer Block-Bild Darstellung den prinzipmäßigen Aufbau eines Durchlauf-Backofens 1 in der erfindungsgemäßen Modulbauweise.
Der Durchlauf-Backofen 1 wird in diesem Ausführungsbeispiel von insgesamt zehn Modulen 2 gebildet. Jedes Modul 2 ist thermisch und elektrisch als eine komplette Einheit ausgebildet. Dabei ist jedes einzelne Modul 2 so ausgeführt, das die Baugruppen eines Gebläsebrenners 4, eines Wärmetauschers 5, eines Umwälzers 6, Radiatoren 7 und Umwälzkanäle 8 für den Vor- und/oder Rücklauf der Backraumluft integriert sind und somit eigenständig funktionsfähig ist.

Der Gebläsebrenner 4 kann je nach den örtlichen Anschlußbedingungen als Öl-oder als Gasbrenner ausgeführt sein. Weiterhin weist jedes Modul 2 eine eigenständige Netzbandstrecke auf.

In diesem Fall weisen die Module 2 jeweils eine Aufnahme- und eine Abgabeeinheit für die Übernahme bzw. Übergabe des zu behandelnde Backgutes von dem bzw. an das benachbarte Modul 2 auf. Es ist, je nach Einsatzfall, auch möglich, daß die Netzbandstrecke über die gesamte, von den Modulen 2 gebildete Backverlaufstrecke reichend ausgebildet ist.

Bei den zum Einsatz kommenden Radiatoren 7 sind für eine effektive Wärmeabstrahlung entsprechende Profilbleche vorgesehen.

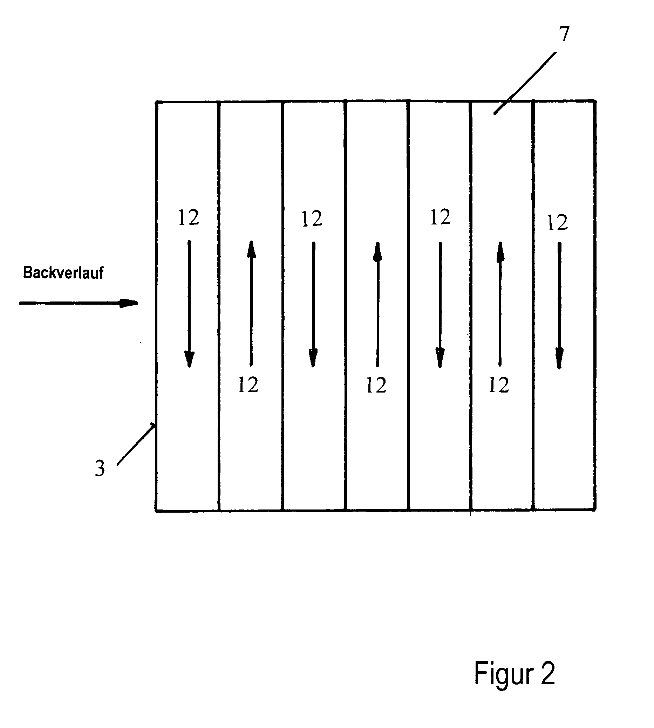

Die Rauchgasströmung 13 (Figur 2) erfolgt innerhalb der Radiatoren 7 wechselseitig und um 90° versetzt zum Backverlauf. Die optimale Breite der Radiatoren 7 liegt je nach Blackfläche des gesamten Ofens zwischen 100mm und 1000mm.
Die Module 2 sind wärmetechnisch miteinander gekoppelt. Backtechnologisch besteht im ersten bzw. in den ersten Modul(en) ein verhältnismäßig großer Wärmebedarf. Mittels der hier vorgesehenen Gebläsebrennern 4 wird die erforderliche Wärme eingebracht. Die entstehenden Rauchgas und Schwaden werden abgesaugt und über den Rauchgassammelkanal 9 an das im Backverlauf folgende Modul 2 geleitet. Dort wird das abgesaugte Rauchgas über den vorhandenen Wärmetauscher 5 geleitet, so daß die in dem Rauchgas vorhandene Wärmemenge weitestgehend an dieses Modul abgegeben wird. Mittels dem vorhandenen Temperatursteuersystem wird der in diesem Modul vorgesehene Gebläsebrenner 4 nur zum Ausgleich der noch benötigte Wärmemenge zwischen Ist-Temperatur und Modul-Sollwerttemperatur gezündet. Zusätzlich kann vorgesehen sein, daß vor Eintritt des Rauchgases in das nächste eine Reinigungsphase zwischengeschaltet ist.

Sollte in einem Modul 2 kein Wärmebedarf vorhanden sein, so wird das Rauchgas mittels einer vorgesehenen Kurzschlußstrecke 10 an diesem Modul vorbei geführt. Über einen Kamin 11 wird letztlich, das verbleibende restliche Rauchgas aus dem Gesamt-Backsystem abgeführt. Da mit zunehmenden Backverlauf der Wärmebedarf in den nachfolgenden Modulen 2 geringer wird, aber immer noch ein bestimmter Wärmeüberschuß aus dem vorangegangenen Modul 2 in das nachfolgende Modul 2 über den Wärmetauscher eingebracht wird, werden auch die Betriebszyklen der Gebläsebrenner 4 kürzer. Es wird somit gegenüber einem Durchlauf-Backofen mit einer über die gesamte Netzbandlänge reichenden Heizungsanlage eine wesentliche Reduzierung des Energiebedarfes erzielt.

### Bezugszeichenliste

- 1: Backofen
- 2: Modul
- 3: Sektion
- 4: Gebläsebrenner
- 5: Wärmetauscher
- 6: Umwälzer
- 7: Radiatoren (Ober- und Unterhitze)
- 8: Umwälzkanäle
- 9: Rauchgassammelkanal
- 10: Kurzschlußstrecke
- 11: Abgaskamin
- 12: Backraum
- 13: Rauchgasströmung

## Patentansprüche

1. Durchlauf-Backofen, welcher sich aus einer Vielzahl von Modulen zusammensetzt,
**dadurch gekennzeichnet, daß**
jedes Modul (2) als eine eigenständige thermische Einheit, bestehend aus Gebläsebrenner (4), Wärmetauscher (5), Umwälzer (6), Radiatoren (7) und Umwälzkanälen (8) für Vor- und/oder Rücklauf der Backraumluft ausgebildet ist.

2. Durchlauf-Backofen nach Anspruch 1,
**dadurch gekennzeichnet, daß**
die Rauchgasströmung (13) in den Radiatoren (7) wechselseitig und um 90° versetzt zum Backverlauf erfolgt.

3. Durchlauf-Backofen nach Anspruch 1 und 2,
**dadurch gekennzeichnet, daß**
die Breite der Radiatoren im Bereich von 100 bis 1000 mm liegt.

4. Durchlauf-Backofen nach Anspruch 1,
**dadurch gekennzeichnet, daß**
die Module (2) thermisch miteinander gekoppelt sind, wobei überschüssige und/oder im Rauchgas enthaltene Restwärme über den Rauchgassammelkanal (9) in das benachbarte, im Backverlauf folgende Modul (2) geleitet wird.

5. Durchlauf-Backofen nach Anspruch 1,
**dadurch gekennzeichnet, daß**
das Modul (2) von einer oder mehreren Sektion(en) (3) gebildet ist.

6. Durchlauf-Backofen nach Anspruch 1 bis 3,
**dadurch gekennzeichnet, daß**
die Module (2) eine Aufnahme- und eine Abgabeeinheit für die Übernahme bzw. Übergabe des zu behandelnde Backgutes vom bzw. an das benachbarte Modul aufweisen.

7. Durchlauf-Backofen nach Anspruch 1,
**dadurch gekennzeichnet, daß**
dieser als Netzbandofen ausgebildet ist und für jedes Modul (2) eine eigenständige Netzbandstrecke vorgesehen ist.

8. Durchlauf-Backofen nach Anspruch 1,
**dadurch gekennzeichnet, daß**
dieser als Netzbandofen ausgebildet ist und die Netzbandstrecke über die gesamte, von den Modulen (2) gebildete Backverlaufstrecke angeordnet ist.

9. Durchlauf-Backofen nach Anspruch 1,
**dadurch gekennzeichnet, daß**
dieser als Plattenbandofen ausgebildet ist und für jedes Modul (2) ein eigenes Plattenband vorgesehen ist.

10. Durchlauf-Backofen nach Anspruch 1,
**dadurch gekennzeichnet, daß**
dieser als Plattenetzbandofen ausgebildet ist und die Netzbandstrecke über die gesamte, von den Modulen (2) gebildete Backverlaufstrecke angeordnet ist.

11. Durchlauf-Backofen nach Anspruch 1,
**dadurch gekennzeichnet, daß** dieser als Durchlauf-Etagenbackofen ausgebildet ist.
